(19) Europäisches Patentamt
European Patent Office
Office européen des brevets

(11) EP 1 315 889 B1

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: 01971639.8

(22) Anmeldetag: **29.08.2001**

(51) Int Cl.7: **F02B 57/04**, F02D 41/14

(86) Internationale Anmeldenummer:
**PCT/DE2001/003213**

(87) Internationale Veröffentlichungsnummer:
**WO 2002/018757 (07.03.2002 Gazette 2002/10)**

(54) **VERFAHREN ZUR STEUERUNG DES VERDICHTUNGSVERHÄLTNISSES AN EINER VERBRENNUNGSKRAFTMASCHINE**

METHOD FOR CONTROLLING THE COMPRESSION RATIO OF AN INTERNAL COMBUSTION ENGINE

PROCEDE DE COMMANDE DU TAUX DE COMPRESSION D'UNE MACHINE A COMBUSTION INTERNE

(84) Benannte Vertragsstaaten:
**DE FR SE**

(30) Priorität: **29.08.2000 DE 10042381**

(43) Veröffentlichungstag der Anmeldung:
**04.06.2003 Patentblatt 2003/23**

(73) Patentinhaber: **ROBERT BOSCH GMBH**
**70442 Stuttgart (DE)**

(72) Erfinder:
• **BAEUERLE, Michael**
**71706 Markgroeningen (DE)**
• **RIES-MUELLER, Klaus**
**74906 Bad Rappenau (DE)**

(56) Entgegenhaltungen:
DE-A- 4 027 625        DE-A- 4 028 594
DE-A- 19 610 277      DE-A- 19 845 965
US-A- 4 860 711

**Beschreibung**

Technisches Gebiet

Aufgeladene Benzin-Verbrennungskraftmaschinen können mit variablen Verdichtungssystemen betrieben werden. Das Verdichtungsverhältnis, welches mit ε bezeichnet wird, kann im Bereich zwischen 8 und 14 variiert werden. Ziel ist, die einzelnen Zylinder einer Benzinverbrennungskraftmaschine im unteren Teillastbereich mit maximal verfügbarer Verdichtung und in den vollastnahen Betriebsbereichen zur Begrenzung der dort stark ausgeprägten Klopfneigung mit minimal verfügbarer Verdichtung zu betreiben.

Stand der Technik

Eine mechanische Lösung, eine variable Verdichtung an einem Otto-Motor zu erzielen, ist aus DE 198 44 200 A1 bekannt. Der dort vorgeschlagene Kurbeltrieb für variable Verdichtung eines Hubkolbenverbrennungsmotors oder Kolbenverdichters besteht aus einem Pleuel mit einstellbarer Position des Pleuelaugenlagers. Die Pleuellänge, d.h. der Abstand zwischen den Achsen des Pleuelaugenlagers und des Kolbenbolzenaugenlagers läßt sich mittels zweier oder mehrerer hydraulischer Kammern verändern. Dazu sind die hydraulischen Kammern in unterschiedlichen aber ergänzenden Maßen ausgebildet, durch die innerhalb der Kurbelwelle und des Stellkolbens laufende und zur Verdichtungseinstellung und eventueller Schmierung dienende Bohrungen mit Schmieröl vorgesehen sind, wobei eine der beiden hydraulischen Kammern eines Kammerpaares prinzipiell durch eine Rückstellfeder ersetzt werden könnte. Zwischen den erwähnten hydraulischen Kammern ist ein doppelwirkend arbeitender Stellkolben aufgenommen, der seinerseits das Pleuelaugenlager aufnimmt.

Aus DE 197 03 948 C1 ist eine weitere Vorrichtung zur Veränderung der Verdichtung einer Hubkolbenbrennkraftmaschine bekanntgeworden. Diese Vorrichtung zur Veränderung der Verdichtung an einer Hubkolbenbrennkraftmaschine umfaßt eine im Motorgehäuse fest gelagerte Kurbelwelle, ein an einer Kurbel der Kurbelwelle gelagertes Pleuel, einen am Pleuel gelagerten, innerhalb eines im Motorgehäuse festen Zylinders aufund abwärts bewegbaren Kolben. Ferner ist eine exzentrische Hülse umfaßt, die mit ihrer zylindrischen Innenfläche an der Kurbel und mit ihrer gegenüber der Innenfläche exzentrischen Außenfläche am dem Pleuel gelagert ist. Durch Verdrehung der Hülse relativ zum Pleuel ist die wirksame Länge des Pleuels veränderbar. Die exzentrische Hülse ist mit wenigstens zwei Verriegelungsausnehmungen ausgebildet, wobei am Pleuel ein Verriegelungsglied angebracht ist, welches Bewegung in einer Richtung in die eine Verriegelungsausnehmung der Hülse und bei Bewegung in eine anderen Richtung in die andere Verriegelungsausnehmung der Hülse eingreift, wobei die eine verriegelte Drehstellung der Hülse etwa maximal und die andere verriegelte Drehstellung etwa minimaler wirksamer Pleuellänge entspricht.

Das Verdichtungsverhältnis von Otto-Motoren hat entscheidenden Einfluß auf das Betriebsverhalten bei aufgeladenen Otto-Motoren. Beim Betrieb der Otto-Motoren mit hohen Lasten ist die Absenkung des Verdichtungsverhältnisses das übliche Mittel, die Klopfneigung des Motors zu beherrschen. Bei einer zu hohen Auslegung des Verdichtungsverhältnisses ist der Vollastbetrieb klopfbegrenzt und es muß der Zündwinkel zurückgenommen werden. Die Zündwinkelrücknahme hat Wirkungsgradeinbußen zur Folge, die wiederum die erreichbaren Vollastmitteldrücke begrenzen. Die mit einer Zündwinkelrücknahme verbundenen späten Verbrennungsphasenlagen ziehen hohe Abgastemperaturen nach sich. Zur Abgastemperaturreduzierung wiederum, was im Hinblick auf der Bauteilschutz erforderlich ist, erfolgt eine starke Gemischanreicherung, die jedoch zu zusätzlichen Verbrauchsnachteilen führt.

Darstellung der Erfindung

Mit der erfindungsgemäß vorgeschlagenen Lösung wird der Weg verfolgt, zunächst im Rahmen der Vorsteuerung die Verdichtung stufenweise zu ändern und danach aus dieser Änderung des Verdichtungsverhältnisses ε die sich neu einstellende Klopfgrenze zu bestimmen. In der Motorsteuerung von aufgeladenen Verbrennungskraftmaschinen ist der Zusammenhang zwischen Wirkungsgrad η, Zündwinkel ZW sowie Verdichtungsverhältnis ε als Kennfeld oder Kennlinienzusammenhang abgelegt, so daß darauf zugegriffen werden kann.

In Kenntnis des Wirkungsgrades η kann für jedes von der Vorsteuerung ermittelte Verdichtungsverhältnis ε resultierend aus der maximal zulässigen Verdichtungsendtemperatur $T_{2,max}$, die Klopfgrenze bestimmt werden. Aus dem Wirkungsgrad, der für jedes Verdichtungsverhältnis ε bekannt ist, läßt sich nunmehr entscheiden, ob eine weitere adaptive Verdichtungsänderung notwendig ist, oder ob die Verdichtungsverhältnisänderung zurückgenommen werden muß.

Mit dieser Lösung kann eine alle Betriebsparameter einer aufgeladenen Verbrennungskraftmaschine berücksichtigende Steuerung des Verdichtungsverhältnisses ε erfolgen, abhängig sowohl von der Ansauglufttemperatur, der Temperatur der Verbrennungskraftmaschine sowie von der Oktanzahl des verwendeten Kraftstoffes, sei es Super oder Normalbenzin. Die Parameter Zündwinkel (ZW) und Verdichtungsverhältnis ε können wirkungsgradoptimal eingestellt werden, wobei insbesondere die sich einstellenden unterschiedlichen Gastemperaturen innerhalb der Polytropenbeziehung berücksichtigt werden, die einen sehr starken Einfluß auf das Klopfverhalten haben und die erhebliches Wirkungsgradpotential bieten. Mit der Verdichtungsendtemperatur $T_{2,max}$ lassen sich die tatsächlich herrschenden thermodynamischen Verhältnisse bezüglich des Wirkungsgrades an der Klopfgrenze einer aufgeladenen Verbrennungskraftmaschine optimal abbilden.

Bei einer in der Motorsteuerung vorhandenen Abgastemperaturregelung kann der ermittelte Temperaturwert $T_{2,max}$ für die Verdichtungsendtemperatur so korrigiert werden, daß sich ein geringerer Verdichtungsgrad $\varepsilon$ einstellt. Das geringere Verdichtungsverhältnis $\varepsilon$, resultierend aus der Begrenzung für $T_{2,max}$, führt zu einer auf den Zündwinkel bezogenen sich früher einstellenden Klopfgrenze und damit zu einer geringeren Abgastemperatur.

## Zeichnung

Anhand der Zeichnung wird die Erfindung nachstehend detaillierter erläutert.

Es zeigt:

Fig. 1 den Kennlinien-Zusammenhang zwischen Wirkungsgrad $\eta$, Zündwinkel ZW und Verdichtungsverhältnis $\varepsilon$,

Fig. 2 den Einfluß des Verdichtungsverhältnisses $\varepsilon$ auf das Vollastbetriebsverhalten und

Fig. 3 den Ablauf einer Verdichtungsverhältnisänderung in der Motorsteuerung im Rahmen einer Vorsteuerung sowie eines adaptiven Teiles.

## Ausführungsvarianten

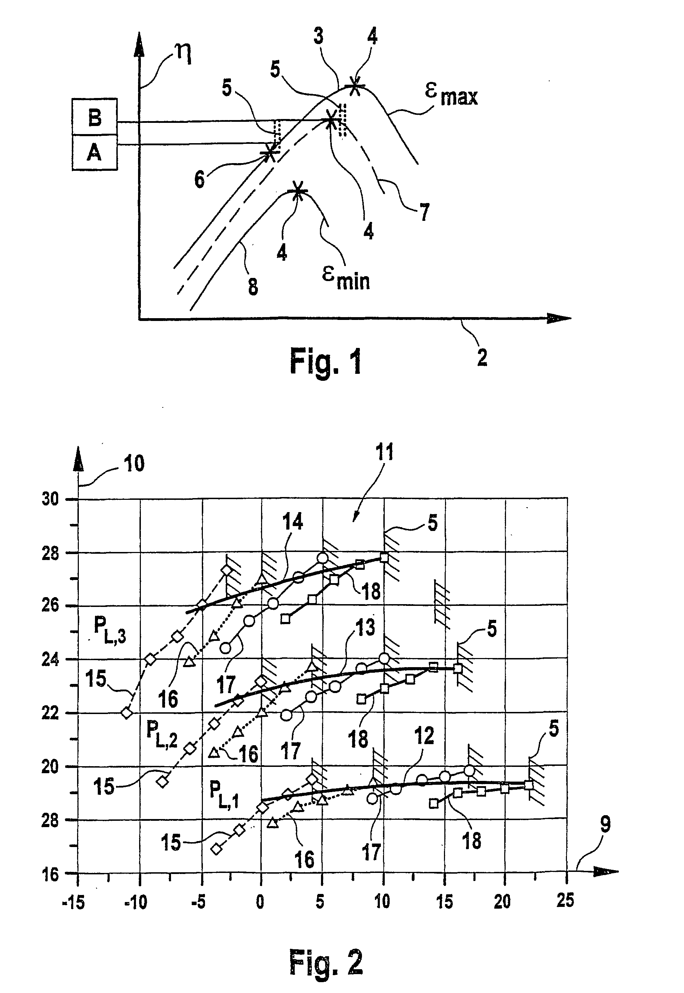

Aus Fig. 1 geht der Kennlinienzusammenhang zwischen dem Wirkungsgrad $\eta$, dem Zündwinkel ZW und des Verdichtungsverhältnisses $\varepsilon$ näher hervor. Das Bezugszeichen 2 bezeichnet die Zündwinkelachse. Aus der Darstellung gemäß Fig. 1 geht der Kennlinienverlauf dreier Kennlinien für jeweils unterschiedliche Verdichtungsverhältnisse $\varepsilon$ hervor. Mit Bezugszeichen 3 ist der Verlauf des maximalen Verdichtungsverhältnisses $\varepsilon_{max}$ gekennzeichnet.

Die sich beim Verlauf des Kurvenzuges 3, welcher das maximale Verdichtungsverhältnis $\varepsilon_{max}$ kennzeichnet, einstellende Klopfgrenze ist mit Bezugszeichen 5 identifiziert. Demzufolge liegt der Betriebspunkt einer Verbrennungskraftmaschine deren Verdichtungsverhältnis $\varepsilon_{max}$ beträgt, bei dem mit Bezugszeichen 6 im Diagramm gemäß Fig. 1 bezeichneten Wert, welcher dem Betriebspunkt A entspricht. Beim Betrieb der Verbrennungskraftmaschine mit dem Verdichtungsverhältnis $\varepsilon_{max}$ kann diese nicht mit ihrem optimalen Wirkungsgrad $\eta$ betrieben werden, da dieser aufgrund der früh erreichten Klopfgrenze 5 nicht erreicht werden kann.

Bei einer Rücknahme des Verdichtungsverhältnisses $\varepsilon$ der Verbrennungskraftmaschine entsprechend des in Fig. 1 gestrichelt dargestellten Kurvenzuges, bezeichnet mit dem Bezugszeichen 7, liegt die Klopfgrenze 5 vor dem mit dem Buchstaben B gekennzeichneten optimalen Betriebspunkt 4. Eine mit dem Verdichtungsverhältnis $\varepsilon$ gemäß des Kurvenzugverlaufes 7 betriebene Verbrennungskraftmaschine kann mit einem höheren Wirkungsgrad $\eta$ im Betriebspunkt B betrieben werden verglichen mit dem Betriebspunkt A, in welchem eine Verbrennungskraftmaschine betrieben werden kann, die aufgrund der Klopfgrenze 5 an einem niedrigeren Betriebspunkt 6 betrieben werden muß.

Schließlich ist in der Darstellung gemäß Fig. 1 ein weiterer Kurvenzug 8 aufgenommen, der den Verlauf des minimalen Verdichtungsverhältnisses $\varepsilon_{min}$ einer Verbrennungskraftmaschine kennzeichnet. Da für dieses Verdichtungsverhältnisses $\varepsilon_{min}$ die Klopfgrenze keine Rolle spielt, kann diese Verbrennungskraftmaschine in optimalem Betriebspunkt 4 entsprechend dem Scheitelpunkt des Kurvenzuges 8 betrieben werden. Der Wirkungsgrad einer so betriebenen Verbrennungskraftmaschine, deren Verdichtungsverhältnis $\varepsilon_{min}$ beträgt, liegt wirkungsgradmäßig betrachtet weit unterhalb der Verbrennungskraftmaschinen-Wirkungsgrade $\eta$ die in den Betriebspunkten A und B erzielbar sind.

Aus der Darstellung gemäß Fig. 2 ist der Einfluß des Verdichtungsverhältnisses $\varepsilon$ auf das Vollastbetriebsverhalten einer aufgeladenen Verbrennungskraftmaschine ablesbar.

Aus dem Diagramm gemäß Fig. 2 geht der Verlauf des Vollastmitteldruckes 10 aufgetragen über den Zündwinkel, bezogen auf den oberen Totpunkt der Zylinder der aufgeladenen Verbrennungskraftmaschine hervor. Mit Bezugszeichen 11 sind drei verschiedene Vollastmitteldruckverläufe dargestellt, jeweils für verschiedene Ladedrücke. Mit Bezugszeichen 12 ist der Verlauf des Vollastmitteldruckes bei einem sich einstellenden Ladedruck von $P_{L,1}$ unterhalb von 2 bar dargestellt. Die Bezugszeichen 15, 16, 17 und 18 kennzeichnen jeweils unterschiedliche Verdichtungsverhältnisse in aufsteigender Reihenfolge. Mit Bezugszeichen 5 ist in dem Diagramm gemäß Fig. 2 jeweils die sich einstellende Klopfgrenze für die verschiedenen Verdichtungsverhältnisse 15, 16, 17 und 18 dargestellt.

Mit Bezugszeichen 13 ist der sich einstellende Vollastmitteldruckverlauf für einen Ladedruck $p_{l2}$ von oberhalb von 2 bar gekennzeichnet, wobei ebenfalls vier unterschiedlich gewählte Verdichtungsverhältnisse $\varepsilon$ eingestellt sind, bezeichnet mit den Bezugszeichen 15, 16, 17 und 18 analog zur Darstellung des Vollastmitteldruckes 12.

Oberhalb des sich einstellenden Verlaufes des Vollastmitteldruckes 13 ist der Verlauf des Vollastmitteldruckes p für einen weiter gesteigerten Ladedruck $P_{L,3}$ dargestellt, der noch höher als der gewählte Ladedruck mit $P_{L,2}$ bezeichnet liegt.

Aus den einander gegenüber gestellten Vollastmitteldruckverläufen 12, 13, 14, die jeweils bei konstanter Drehzahl und konstantem Luftverhältnis aufgenommen sind, geht hervor, daß bei einer zu hohen Auslegung des Verdichtungsverhältnisses $\varepsilon$ beispiels-

weise gekennzeichnet durch die Bezugszeichen 17 und 18, der Vollastbetrieb einer aufgeladenen Verbrennungskraftmaschine durch die Klopfgrenze begrenzt ist. Daher wird als Abhilfe der Zündwinkel zurückgenommen, so daß vor Erreichen des oberen Totpunktes gezündet wird. Dies hat jedoch Wirkungsgradeinbußen zur Folge, die wiederum die erreichbaren Vollastmitteldrücke begrenzen. Die sich aufgrund der früheren Zündung einstellenden späten Verbrennungsphasenlagen führen zu hohen Abgastemperaturen, was wiederum aus Bauteilschutzgründen eine notwendige Abgastemperaturreduzierung durch Gemischanreicherung notwendig macht. Die Gemischanreicherung wiederum führt zu Verbrauchsnachteilen, da zur Begrenzung der Temperatur mehr Kraftstoff bei der Gemischaufbereitung eingesetzt werden muß.

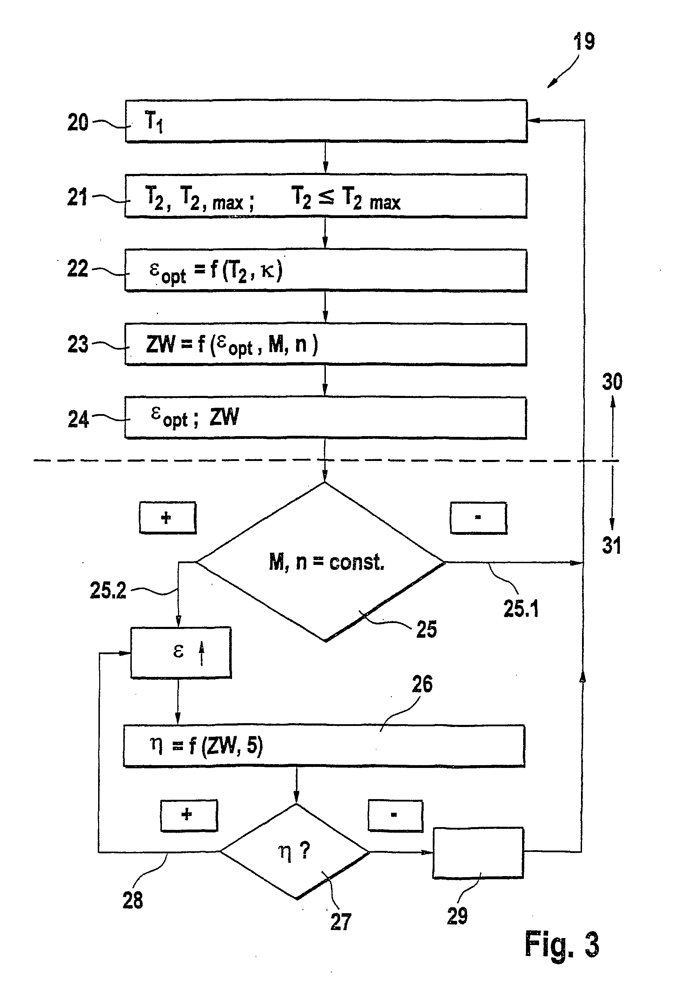

Aus der Darstellung gemäß Fig. 3 gehen die zur Veränderung des Verdichtungsverhältnisses $\varepsilon$ mittels einer Motorsteuerung vorzunehmenden Verfahrensschritte näher hervor, wobei die Motorsteuerung in einem Vorsteuerungsteil 30 sowie in einen adaptiven Teil 31 unterteilt werden kann.

Aufgabe der Motorsteuerung ist es, auf Basis der aktuellen Informationen Last (M), Drehzahl (n), Ansaugluft- bzw. Ladelufttemperatur, Motortemperatur sowie zur Klopfempfindlichkeit die Parameter Verdichtungsverhältnis $\varepsilon$ und Zündwinkel ZW wirkungsgradoptimal einzustellen. Ferner gilt es, im Rahmen der Motorsteuerung die sich von der Oktanzahl des verwendeten Kraftstoffs, sei es Superbenzin oder Normalbenzin, einstellende Klopfgrenze zu bestimmen.

Innerhalb einer Vorsteuerung 30 des Ablaufdiagramms 19 für eine Motorsteuerung werden die beiden Stellgrößen Verdichtungsverhältnis $\varepsilon$ und Zündwinkel ZW berechnet, welche durch eine Adaption 31 in Verbindung mit der Klopfregelung zur Berücksichtigung der Kraftstoffeinflüsse optimiert werden.

In der Motorsteuerung wird die Temperatur der Ladeluft im Brennraum bei Einlaßende $T_1$ durch eine einfache Modellrechnung als Funktion der Motortemperatur, der Ansauglufttemperatur und des sich einstellenden Luftmassenstromes ermittelt. Aus dem Verdichtungsverhältnis $\varepsilon$ kann die Verdichtungsendtemperatur $T_2$ gemäß der Polytropenbeziehung folgendermaßen bestimmt werden:

$$T_2 = T_1 \cdot \varepsilon^{(\kappa-1)}$$

Im Ablaufdiagramm 19 gemäß Fig. 3 erfolgt die Bestimmung der Temperatur $T_1$ bei Einlaßende bei 20. Diese Verdichtungsendtemperatur $T_2$ bestimmt zusammen mit der Oktanzahl des eingesetzten Kraftstoffes im wesentlichen die Klopfgrenze des Motors und eignet sich gut zur Berechnung der optimalen Verdichtung. Dies stellt eine Zustandsgröße dar, welche dem energetischen Endgaszustand am nächsten kommt und durch die Selbstentzündungstemperatur des Endgases während der Verbrennung begründet ist. In der Motorsteuerung kann ein Grenzwert für die maximal zulässige Verdichtungsendtemperatur $T_{2,max}$ in Form eines Last (M)/Drehzahl(n)-abhängigen Kennfeldes abgelegt werden. Aus diesem Kennfeld gehen die tatsächlich sich einstellenden thermodynamischen Verhältnisse bezüglich des Wirkungsgrades $\varepsilon$ an der Klopfgrenze 5 einer Verbrennungskraftmaschine hervor. Wird die sich aus der Polytropenbeziehung einstellende Temperatur $T_2$ kleiner als die maximal zulässige Verdichtungstemperatur $T_{2,max}$ gehalten (Bezugszeichen 21 im Ablaufdiagramm 19), so kann daraus unter der Randbedingung $T_2 \leq T_{2,max}$ die höchstmögliche, d.h. wirkungsgradoptimale Verdichtung gemäß der nachfolgenden Beziehung bestimmt werden:

$$\varepsilon = (T_{2,max} / T_1)^{\left(\frac{1}{\kappa - 1}\right)}$$

mit $\kappa$ = Polytropenexponent.

Unter Voraussetzung eines konstanten Polytropenexponenten ($\kappa \cong 1{,}3$) kann dieser Zusammenhang vereinfacht in einem Kennfeld als Funktion der Temperaturen $T_1$ und $T_{2,max}$ abgelegt werden und ist jederzeit für die Motorsteuerung zugreifbar. Die höchstmögliche, d.h. wirkungsoptimale Verdichtung wird im Ablaufdiagramm 19 bei 22 ermittelt.

Optional kann in der Motorsteuerung auch eine Abgastemperaturregelung vorhanden sein, welche bei Überschreiten der maximalen Abgastemperatur den Grenzwert $T_{2, max}$ so korrigiert, daß sich eine kleinere Verdichtung $\varepsilon$ einstellt. Bei einer kleineren sich einstellenden Verdichtung s wird eine frühere zündwinkelbezogene Klopfgrenze erreicht. Es stellt sich ein früherer Zündwinkel ein. Ein früherer Zündwinkel führt zu geringeren Abgastemperaturen. Damit läßt sich der Forderung nach der Beibehaltung eines stöchiometrischen Luftverhältnisses mit der Luftzahl unter allen Betriebsbedingungen der aufgeladenen Verbrennungskraftmaschine Rechnung tragen ($\lambda$ = 1).

Nach Bestimmung des optimalen Verdichtungsverhältnisses $\varepsilon_{opt}$ erfolgt bei 23 im Ablaufdiagramm 19 gemäß Fig. 3 die Berechnung des zugehörigen Zündwinkels ZW als Funktion von Last(M), Drehzahl(n) und optimaler Verdichtung $\varepsilon_{opt}$. Dazu können optional mehrere Last/Drehzahl-Zündwinkelkennfelder unterschiedlicher Verdichtungswerte $\varepsilon$ interpoliert werden.

Nach Ermittlung des zugehörigen Zündwinkels (ZW) wird dieser sowie das errechnete aus der Polytropenbeziehung unter Annahme eines konstanten Polytropenexponenten $\kappa$ = 1,3 ermittelte optimale Verdichtungsverhältnis $\varepsilon_{opt}$ durch die Motorsteuerung als Stellgrößen an der Verbrennungskraftmaschine eingestellt.

Die bisher geschilderten Berechnungen erfolgten im Rahmen der Vorsteuerung 30 der Motorsteüerung an welche sich die nachfolgend näher beschriebenen adaptiven Operationen 31 anschließen.

Nach Erreichen eines stabilen Betriebspunktes der Verbrennungskraftmaschine wird überprüft, ob die Adaptionsbedingung 25, d.h. das annähernde Konstanthalten von Last/und Drehzahl an der aufgeladenen Verbrennungskraftmaschine ungefähr erfüllt ist.

Wird dies verneint, so erfolgt über 25.1 ein Rücksprung zum Ablaufdiagramm 19 zur Berechnung der Gemischtemperatur $T_1$ bei Verdichtungsbeginn bei 20.

Wird dies hingegen bej aht, erfolgt eine Verzweigung von der Adaptionsstufe 25 über 25.2 zu einer Adaptionsstufe 26, in welcher über eine weitere adaptive Änderung des Verdichtungsverhältnisses $\varepsilon$ entschieden wird. Nach der adaptiven Änderung des Verdichtungsverhältnisses $\varepsilon$ über 25.2 erfolgt eine Neuberechnung des sich einstellenden Wirkungsgrades $\eta$ als Funktion des Zündwinkels (ZW) bzw. der sich nun ergebenden Klopfgrenze 5 bei 26. Der den Zündwinkel berücksichtigende Wirkungsgrad und die sich einstellende neue Klopfgrenze nach Änderung des Verdichtungsverhältnisses $\varepsilon$ bei 25.2 erfolgen nach Stabilisierung des sich neu einstellenden Arbeitspunktes der aufgeladenen Verbrennungskraftmaschine. An diese Berechnungsroutine 26 schließt sich eine Abfrage des Wirkungsgrades $\eta$ bei 27 an. Ist der Wirkungsgrad $\eta$ gestiegen, wird über eine Verzweigung 28 zur adaptiven Steigerung des Verdichtungsverhältnisses $\varepsilon$ bei 25.2 zurückverzweigt, um in einem weiteren Durchlauf der Routine 25.2, 26, 27 eine weitere Wirkungsgradsteigerung an der aufgeladenen Verbrennungskraftmaschine herbeiführen zu können.

Hat sich hingegen ein geringerer Wirkungsgrad eingestellt, so wird zu 29 verzweigt, wo eine Rücknahme der Änderung des Verdichtungsverhältnisses $\varepsilon$ bei 25.2 initialisiert wird. Dazu wird zum Beginn des Ablaufdiagrammes 19 bei Bezugszeichen 20 zur Berechnung der Gemischtemperatur $T_1$ bei Verdichtungsbeginn zurückverzweigt.

Mit der erfindungsgemäß vorgeschlagenen Lösung kann unterschiedlichen äußeren Bedingungen wie der Ansauglufttemperatur sowie der Motortemperatur Rechnung getragen werden, ebenso wie unterschiedlichen Kraftstoffqualitäten, die hinsichtlich ihrer Oktanzahl durchaus Einfluß auf die sich einstellende Klopfgrenze 5 haben können. Das erfindunsgemäß vorgeschlagene Verfahren kombiniert die variable Verdichtung unter Beeinflussung des Verdichtungsverhältnisses $\varepsilon$ der Klopfregelung und bewirkt eine davon abhängige Zündwinkelverstellung. Es werden unterschiedliche Temperaturen, die einen starken Einfluß auf das Klopfverhalten haben zur Variation des Verdichtungsverhältnisses $\varepsilon$ benutzt, so daß eine erhebliche Verbesserung des Wirkungsgradverhältnisses $\eta$ eingestellt werden kann. Im Teillastbereich lassen sich aufgeladene Verbrennungskraftmaschinen mittels der erfindungsgemäß vorgeschlagenen Lösung mit maximal verfügbarem Verdichtungsverhältnis $\varepsilon$ betreiben und im Vollastbereich läßt sich zur Begrenzung der Klopfneigung das Verdichtungsverhältnis $\varepsilon$ entsprechend zurücknehmen.

Bezugszeichenliste

| 1 | Wirkungsgradverlauf $\eta$ |
|---|---|
| 2 | Zündwinkel |
| 3 | maximales Verdichtungsverhältnis $\varepsilon_{max}$ |
| 4 | optimaler Betriebspunkt |
| 5 | Klopfgrenze |
| 6 | Betriebspunkt bei maximalem Verdichtungsverhältnis $\varepsilon_{max}$ |
| 7 | reduziertes Verdichtungsverhältnis |
| 8 | Verlauf minimales Verdichtungsverhältnis $\varepsilon_{min}$ |
| 9 | Zündzeitpunktverlauf |
| 10 | Vollastmitteldruck |
| 11 | Vollastmitteldruckverlauf |
| 12 | Vollastmitteldruck bei $P_{1,1}$ |
| 13 | Vollastmitteldruck bei $P_{1,2}$ |
| 14 | Volllastmitteldruck $P_{1,3}$ |
| 15 | Verdichtungsverhältnis 1 |
| 16 | Verdichtungsverhältnis 2 |
| 17 | Verdichtungsverhältnis 3 |
| 18 | Verdichtungsverhältnis 4 |
| 19 | Ablaufdiagramm für Motorsteuerung Motronik |
| 20 | Berechnung Gemischtemperatur $T_1$ |
| 21 | Berechnung von $T_{2,max}$ |
| 22 | Berechnung $\varepsilon_{opt}$ aus Kennfeld $T_{2,max}$ f $(T_{1,\kappa})$ |
| 23 | Berechnung Zündwinkel = f $(\varepsilon_{opt}, M, n)$ |
| 24 | Einstellung berechneter Werte |
| 25 | Adaptionsstufe |
| 25.1 | Rücksprung |
| 25.2 | Freigabeänderung Verdichtungssteuerung |
| 26 | Berechnung Zündwinkel ZW |
| 27 | Abfrage $\eta$ |
| 28 | Verzweigung zu Verdichtungsänderung |
| 29 | Rücknahmeverdichtungsänderung |
| 30 | Vorsteuerungsteil |
| 31 | Adaptionsteil |

**Patentansprüche**

**1.** Verfahren zur Steuerung des Verdichtungsverhältnisses $\varepsilon$ an einer aufgeladenen Verbrennungskraftmaschine mit einer Steuereinheit, in welcher aus einer maximalen Verdichtungsendtemperatur $T_{2,max}$ im Rahmen einer Vorsteuerung (30) ein wirkungsgradoptimales Verdichtungsverhältnis $\varepsilon_{opt}$ ermittelt wird und nachfolgende Verfahrensschritte durchlaufen werden:

- aus dem in der Vorsteuerung (30) ermittelten Verdichtungsverhältnis $\varepsilon$ wird eine neue Klopf-

grenze (5) ermittelt,

- abhängig vom Wirkungsgradverlauf im Kennfeld $\eta$ = f ($\varepsilon$, ZW) erfolgt eine Adaption (31) des Verdichtungsverhältnisses ($\varepsilon$) oder eine Rücknahme der Verdichtungsänderung,

- die Betriebspunkt abhängig gelernten Werte für $\varepsilon$ und ZW werden in einem Kennfeld dauerhaft gespeichert.

2. Verfahren gemäß Anspruch 1, **dadurch gekennzeichnet, daß** aus der Verdichtungsendtemperatur $T_2 \leq T_{2,max}$ und der Oktanzahl des Kraftstoffes die Klopfgrenze (5) ermittelt wird.

3. Verfahren gemäß Anspruch 1, **dadurch gekennzeichnet, daß** im Rahmen der Vorsteuerung unter der Randbedingung $T_2 < T_{2,max}$ aus der Beziehung

$$\varepsilon = (T_{2,max} / T_1) \left(\frac{1}{\kappa - 1}\right)$$

das optimale Verdichtungsverhältnis $\varepsilon_{opt}$ bestimmt wird.

4. Verfahren gemäß der Ansprüche 1 bis 3, **dadurch gekennzeichnet, daß** innerhalb der Vorsteuerung (30) der dem jeweils ermittelten optimalen Verdichtungsverhältnis $\varepsilon_{opt}$ entsprechende Zündwinkel (ZW) als Funktion von Last (M), Drehzahl (n) und Verdichtungsverhältnis $\varepsilon_{opt}$ bestimmt wird.

5. Verfahren gemäß Anspruch 4, **dadurch gekennzeichnet, daß** innerhalb der Vorsteuerung (30) zur Bestimmung des Zündwinkels (ZW) mehrere Last/Drehzahl-Zündwinkelkennfelder für unterschiedliche Verdichtungsverhältnisse $\varepsilon$ interpoliert werden.

6. Verfahren gemäß Anspruch 1, **dadurch gekennzeichnet, daß** die Adaptionsbedingung (25) durch annäherndes Konstanthalten von Lastmoment (11) und Drehzahl n gegeben ist.

7. Verfahren gemäß Anspruch 1, **dadurch gekennzeichnet, daß** nach Vornahme der Änderung des Verdichtungsverhältnisses $\varepsilon$ durch Anpassung des Gemischvolumens der Zündwinkelwirkungsgrad unter Berücksichtigung der neuen Klopfgrenze (5) berechnet wird.

8. Verfahren gemäß Anspruch 1, **dadurch gekennzeichnet, daß** nach der Stabilisierung des neuen Arbeitspunktes der aufgeladenen Verbrennungskraftmaschine als f ($\varepsilon_{opt}$, ZW) eine Ermittlung des sich einstellenden Wirkungsgrades $\eta$ erfolgt.

9. Verfahren gemäß Anspruch 8, **dadurch gekennzeichnet, daß** abhängig vom sich ergebenden Wirkungsgrad $\eta$ der aufgeladene Verbrennungskraftmaschine eine Adaption (31) des Verdichtungsverhältnisses $\varepsilon$ auf höhere Werte oder eine Rücknahme der Änderung des Verdichtungsverhältnisses $\varepsilon$ erfolgt.

10. Verfahren gemäß Anspruch 2, **dadurch gekennzeichnet, daß** der Grenzwert $T_{2,max}$ so festgelegt wird, daß sich ein kleineres Verdichtungsverhältnis $\varepsilon$ einstellt bei Vorgabe und bei Beibehaltung eines Luftverhältnisses von $\lambda$ = 1.

**Claims**

1. Method for controlling the compression ratio $\varepsilon$ at a supercharged internal combustion engine having a control unit, in which, as part of a prior control (30), an efficiency-optimum compression ratio $\varepsilon_{opt}$ is determined from a maximum final compression temperature $T_{2,max}$ and subsequent method steps are run through:

- a new knock limit (5) is determined from the compression ratio $\varepsilon$ determined in the pilot control (30),

- the compression ratio ($\varepsilon$) is adapted (31) or the compression change reduced as a function of the efficiency profile in the characteristic diagram $\eta$ = f($\varepsilon$, ZW),

- the values for $\varepsilon$ and ZW which have been learnt as a function of the operating point are permanently stored in a characteristic diagram.

2. Method according to Claim 1, **characterized in that** the knock limit (5) is determined from the final compression temperature $T_2 \leq T_{2,max}$ and the octane number of the fuel.

3. Method according to Claim 1, **characterized in that** as part of the pilot control under the boundary condition $T_2 < T_{2,max}$ from the relationship

$$\varepsilon = \left(T_{2,max} / T_1\right)\left\{\frac{1}{K - 1}\right\}$$

the optimum compression ratio $\varepsilon_{opt}$ is determined.

4. Method according to Claims 1 to 3, **characterized in that** within the pilot control (30) the ignition angle (ZW) corresponding to the optimum compression ratio $\varepsilon_{opt}$ which has in each case been determined is determined as a function of load (M), engine speed (n) and compression ratio $\varepsilon_{opt}$.

5. Method according to Claim 4, **characterized in that** a plurality of load/engine speed/ignition angle characteristic diagrams for different compression ratios $\varepsilon$ are interpolated within the pilot control (30) in order for the ignition angle (ZW) to be determined.

6. Method according to Claim 1, **characterized in that** the adaptation condition (25) is given by keeping the load moment (11) and engine speed n approximately constant.

7. Method according to Claim 1, **characterized in that** after the change to the compression ratio $\varepsilon$ has been performed by adjusting the mixture volume, the ignition angle efficiency is calculated taking account of the new knock limit (5).

8. Method according to Claim 1, **characterized in that** after the new working point of the supercharged internal combustion engine has been stabilized as f ($\varepsilon_{opt}$, ZW), the efficiency $\eta$ which is established is determined.

9. Method according to Claim 8, **characterized in that** the compression ratio $\varepsilon$ is adapted (31) to higher values or the change in the compression ratio $\varepsilon$ is reduced as a function of the resultant efficiency $\eta$ of the supercharged internal combustion engine.

10. Method according to Claim 2, **characterized in that** the limit value $T_{2,max}$ is defined in such a way that a lower compression ratio $\varepsilon$ is established if an air ratio of $\lambda=1$ is preset and maintained.

**Revendications**

1. Procédé de commande du taux de compression $\varepsilon$ d'un moteur à combustion interne comprenant une unité de commande dans laquelle, à partir d'une température maximale de fin de compression $T_{2,max}$ dans le cadre d'une précommande (30) est établi le taux de compression $\varepsilon_{opt}$ à rendement optimal, puis sont effectuées les étapes suivantes du procédé:

- à partir du taux de compression $\varepsilon_{opt}$ établi dans la précommande (30), une nouvelle limite de cliquetis (5) est établie,
- en fonction de l'évolution du rendement dans le champ de caractéristiques $\eta$ = f ($\varepsilon$, ZW) ZW étant l'angle d'allumage, a lieu une adaptation (31) du rapport de compression ($\varepsilon$) ou une reprise de la variation de la compression,
- les valeurs de $\varepsilon$ et ZW définies en fonction du point de fonctionnement sont enregistrées durablement dans un champ de caractéristiques.

2. Procédé selon la revendication 1, **caractérisé en ce que** la limite de cliquetis (5) est établie à partir de la température de compression $T_2 \leq T_{2\,max}$, et de l'indice d'octane de carburant.

3. Procédé selon la revendication 1, **caractérisé en ce que** dans le cadre de la précommande sous la condition de limite $T_2 \leq T_{2\,max}$, le taux optimal de compression $\varepsilon_{opt}$ est défini par la relation

$$\in\, =\, \left(T_{2,\,max}\,/T_1\right)^{\left(\frac{1}{k-1}\right)}$$

4. Procédé selon l'une des revendications 1 à 3, **caractérisé en ce qu'** à l'intérieur de la précommande (30), l'angle d'allumage (ZW) correspondant au taux optimal de compression établi chaque fois, est défini en fonction de la charge (M), de la vitesse de rotation (n) et du taux optimal de compression $\varepsilon_{opt}$.

5. Procédé selon la revendication 4, **caractérisé en ce que** à l'intérieur de la précommande (30), pour déterminer l'angle d'allumage (ZW), plusieurs champs de caractéristiques charge/vitesse de rotation - angle d'allumage pour différents taux de compression sont interpolés entre eux.

6. Procédé selon la revendication 1, **caractérisé en ce que** la condition d'adaptation (25) est donnée en maintenant à peu près constants le couple de charge (11) et la vitesse de rotation n.

7. Procédé selon la revendication 1, **caractérisé en ce qu'** après exécution de la modification du taux de compression $\varepsilon$ par adaptation du volume du mélange, le rendement de l'angle d'allumage est calculé en prenant en compte la nouvelle limite de cliquetis (5).

8. Procédé selon la revendication 1, **caractérisé en ce qu'** après stabilisation du nouveau point de fonctionnement du moteur en charge, a lieu l'établissement du rendement $\eta$ qui s'établit sous la forme d'une fonction f ($\varepsilon_{opt}$, ZW).

9. Procédé selon la revendication 8,

**caractérisé en ce qu'**

en fonction du rendement η qui en résulte pour le moteur en charge, a lieu une adaptation (31) du taux de compression ε à des valeurs plus élevées ou une reprise de la variation de ce taux.

10. Procédé selon la revendication 2,
**caractérisé en ce qu'**

la valeur limite $T_{2,max}$ est fixée de manière à établir un taux de compression ε plus petit, pour un rapport d'air λ = 1 prédéfini et maintenu.

Fig. 1

Fig. 2

Fig. 3